# EUROPEAN PATENT APPLICATION

(11) **EP 2 525 258 A1**
(43) Date of publication of application: **21.11.2012**
(21) Application number: 11193597.9
(22) Date of filing: 14.12.2011
(51) Int. Cl.: G03B 21/14, H04N 9/31

(54) **Projector and control method thereof**

(30) Priority: 20.05.2011 KR 20110048057
(71) Applicant: Samsung Electronics Co., Ltd., Suwon-si, Gyeonggi-do, 443-742 (KR)
(72) Inventor: Keum, Kun-ho, Suwon-si (GB); Yoon, Ju-seok, Hwaseong-si (KR); Jang, Kyoung-choul, Suwon-si (KR); Kim, Sang-jin, Suwon-si (KR); Park, Ki-hong, Suwon-si (KR)
(74) Representative: Waddington, Richard

(57) **Abstract**

A projector and method of controlling a projector, the projector including: a projection unit (200) configured to project an image; first and second sensors (131,132) which are disposed to be centered about the projection unit and configured to detect a motion of an object; and a control unit configured to control the projector if the motion of the object is detected by at least one of the first and the second sensors, wherein an axis of detection (530) of the first sensor intersects an axis of detection (430) of the second sensor.

## Description

### BACKGROUND

### 1. Field

Apparatuses and methods consistent with the present inventive concept relate to a projector and a control method thereof, and more particularly to a projector and a control method thereof, which can detect a person approaching a projection region of the projector or existing therein thus to prevent her vision from being impaired.

### 2. Description of the Related Art

A projector, a projection system or the like is a display apparatus, which projects received image signals onto a screen by using a light emitted from a light source (for example, a light emitting diode (LED) or a lamp) thus to show images. Such a display apparatus is used, for example, in a presentation in a conference room, or in a motion picture projector at a theater, or in a home theater, etc.

The light source provided in the projector emits a projection light when it is supplied with electric power. The projection light emitted from the projector is very strong, i.e., intense, and if a person looks directly at a lens of the projector during operation of the projector, her vision may be worsened, and if exposed to the projection light for a long period of time, her vision may be impaired.

A projector with a protection circuit has been recently proposed, which detects a projection area of the projection light using a sensor and which stops the projection operation, or reduces the strength of the projection light if a person is detected within the projection area.

However, in the case of an ultra-short focus projector, since an angle of projection of the projection light is wider than that of general projectors, there is a problem in that it is difficult to detect the existence or the approach of the person in the projection area of the projector using the related art detecting method.

### SUMMARY

Exemplary embodiments may overcome the above disadvantages and other disadvantages not described above. However, an exemplary embodiment is not required to overcome the disadvantages described above, and an exemplary embodiment may not overcome any of the problems described above.

According to the present invention there is provided an apparatus and method as set forth in the appended claims. Other features of the invention will be apparent from the dependent claims, and the description which follows.

According to an aspect of an exemplary embodiment, there is provided a projector which may include: a projection unit configured to project an image; first and second sensors which are disposed to be centered about the projection unit and configured to detect a motion of an obj ect; and a control unit configured to control the projector if the motion of the object is detected by at least one of the first and the second sensors, wherein an axis of detection of the first sensor intersects an axis of detection of the second sensor.

The first sensor may be disposed on a left of the projection unit and may be configured to detect a right region and a center region of the projection area, and the second sensor may be disposed on a right of the projection unit and may be configured to detect a left region and the center region of the projection area.

The axis of detection of the first sensor may form an angle of 30 to 50 degrees with a center axis of projection.

The axis of detection of the first sensor may form an angle of 5 to 15 degrees with a center axis of projection.

The axis of detection of the first sensor may intersect a first point on an right side with respect to a screen point intersecting a center axis of projection, and the axis of detection of the second sensor may intersect a second point on an left side with respect to the screen point intersecting the center axis of projection.

The control unit may control the projection unit to turn off a projection light if the motion of the object is detected by the at least one of the first and the second sensors.

The control unit may control the projection unit to reduce a projection light if the motion of the obj ect may be detected by the at least one of the first and the second sensors.

The projector may further include: a storing unit configured to store a message; and an output unit configured to output the message stored in the storing unit, wherein the control unit may control the output unit to output the message if the motion of the object is detected by the at least one of the first and the second sensors.

The projector may be an ultra-short focus projector.

The first and the second sensors may include pyro-electric infrared sensors, respectively.

According to an aspect of an exemplary embodiment, there is provided a method of controlling a projector including a projection unit, wherein the method may include: projecting an image by the projection unit; detecting a motion of an object by at least one of a first and second sensor which are respectively disposed to be centered about the projection unit; and controlling the projector if the motion of the object is detected by the at least one of the first and the second sensors, wherein an axis of detection of the first sensor may intersect an axis of detection of the second sensor.

The first sensor may be disposed on a left of the projection unit and may be configured to detect a right region and a center region of the projection area, and wherein the second sensor may be disposed on a right of the projection unit and is configured to detect a left region and the center region of the projection area.

The axis of detection of the first sensor may form an angle of 30 to 50 degrees with a center axis of projection.

The axis of detection of the first sensor may form an angle of 5 to 15 degrees with a center axis of projection.

The axis of detection of the first sensor may intersect a first point on an right side with respect to a screen point intersecting a center axis of projection, and wherein the axis of detection of the second sensor may intersect a second point on an left side with respect to the screen point intersecting the center axis of projection.

The controlling may include turning off a projection light projecting the image if the motion of the object is detected by at least one of the first and the second sensors.

The controlling may include reducing a projection light projected by the projector in strength if the motion of the object is detected by at least one of the first and the second sensors.

The method may further include: outputting a previously stored message if the motion of the object is detected by the first and the second sensors.

According to an aspect of an exemplary embodiment, there is provided a projector which may include: a projection unit configured to project a light; a plurality of sensors disposed about a center axis of projection of the light projected by the projection unit, wherein each of plurality of sensors is configured to detect a motion of a person within a predetermined detection space; and a control unit configured to control an operation of the projector if the motion of the person is detected by at least one of the plurality of sensors, wherein a detection space of a first sensor of the plurality of sensors may cover at least a portion of a detection space of a second sensor of the plurality of sensors.

The light projected by the projection unit is projected within a projection space, wherein the first sensor may be disposed on a left of the projection space and the second sensor may be disposed on a right of the projection space.

A total detection space including the detection space of the first sensor and the detection space of the second sensor may substantially cover the projection space.

An axis of detection of the first sensor may intersect a first point within the projection space which is on a right of a center point intersected by the center axis of projection, and an axis of detection of the second sensor may intersect a second point within the projection space which is on a left of the center point intersected by the center axis of projection.

The operation of the projector controlled by the control unit may include turning off the light projected by the projection unit.

The object detected may be a person.

The first and second sensors may further be disposed opposite to the projection unit.

According to an aspect of an exemplary embodiment, there is provided a projector which may include: a projection unit configured to project a light within a projection area; a plurality of sensors disposed about a center axis of projection of the light projected by the projection unit, wherein each of plurality of sensors is configured to detect motion via one of temperature and heat changes within a predetermined detection area; and a control unit configured to control the projecting of the light by the projection unit if the motion is detected by at least one of the plurality of sensors, wherein a detection area of a first sensor of the plurality of sensors overlaps at least a portion of a detection area of a second sensor of the plurality of sensors.

### BRIEF DESCRIPTION OF THE DRAWINGS

The above and/or other aspects will become more apparent by describing certain exemplary embodiments with reference to the accompanying drawings, in which:

FIG. 1 is a block diagram view showing a configuration of a projector according to an exemplary embodiment;

FIG. 2 is a side view showing a projection space/area of the projector according to an exemplary embodiment;

FIG. 3 is a top view showing the projection space/area of the projector according to an exemplary embodiment;

FIGS. 4 to 6 are views showing a detection area according to exemplary embodiments;

FIG. 7 is a view showing a screen point to an axis of detection and a center axis of projection according to an exemplary embodiment;

FIG. 8 is a flowchart showing a control method of the projector according to an exemplary embodiment; and

FIG. 9 is a flowchart for explaining a detecting operation and a protection mode operation in FIG. 8.

### DETAILED DESCRIPTION OF EXEMPLARY EMBODIMENTS

Exemplary embodiments are described in greater detail below with reference to the accompanying drawings.

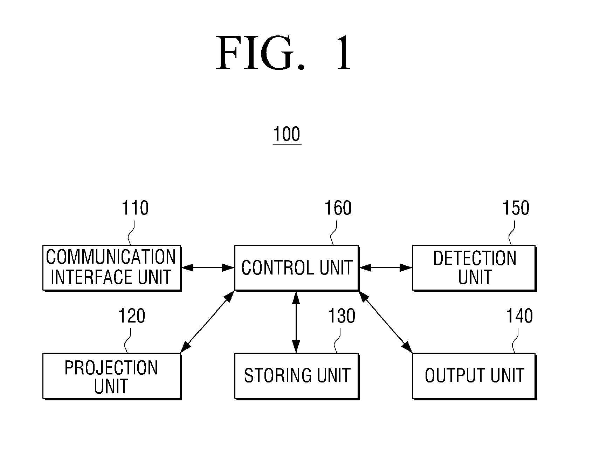

FIG. 1 is a block diagram view showing a configuration of a projector according to an exemplary embodiment.

Referring to FIG. 1, the projector 100 includes a telecommunication interface unit 110, a projection unit 120, a storing unit 130, an output unit 140, a detection unit 150, and a control unit 160. Here, the projector 100 may be an ultra-short focus projector.

The communication interface unit 110 is formed for connecting the projector 100 with outer appliances (not shown), and may be embodied in a form where it is connected by a universal serial bus (USB) port and a wireless communication method, as well as a form where it is connected to the outer appliances through a local area network (LAN) or an internet network.

If the projector 100 has a function capable of receiving and outputting broadcasting signals, the communication interface unit 110 may receive broadcasting by wire or radio from a satellite or a broadcasting station and demodulate it. The communication interface unit 110 may divide the received broadcasting signals into video signals, audio signals, and broadcasting information, and may image-process the divided video signals to be transmitted to the projection unit 120 and audio-process the divided audio signals to be transmitted to the output unit 140.

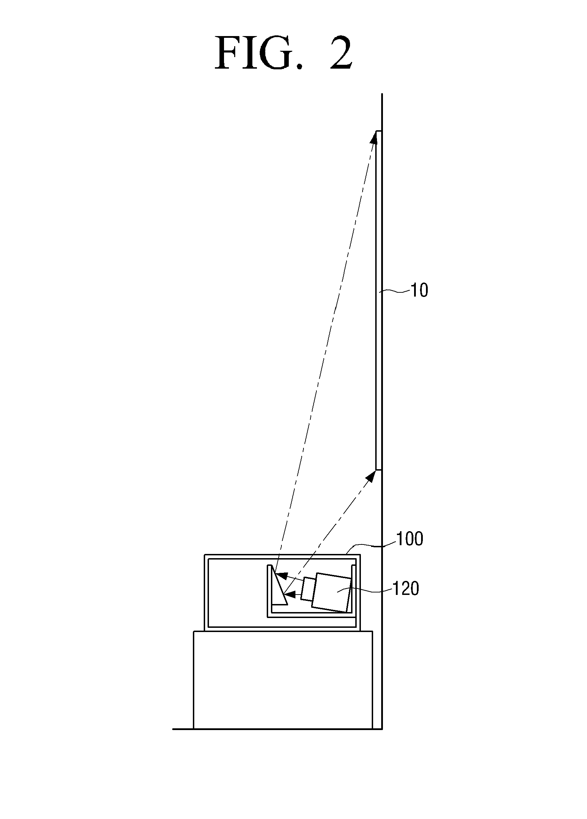

The projection unit 120 projects images. To be more specific, the projection unit 120 may project images transmitted from the communication unit 110 or images stored in advance in the storing unit 130 by using a light source, such as a lamp or a light emitting diode (LED). Detailed configuration and operation on the projection unit 120 will be described later with reference to FIG. 2.

The storing unit 130 may store contents received from or broadcasting signals processed by the communication interface unit 110. The storing unit 130 may also store a message. The storing unit 130 may be embodied by a memory, for example, a read only memory (ROM), a flash memory, or a hard disk drive (HDD), mounted in the projector 100, or by an external HDD or a memory card, for example, a flash memory (M/S, XD, SD, etc.) or a USB memory, connected with the projector 100.

In this case, the message may be a warning message, and may include a message informing a user that she is exposed to a projection light of the projector. This message may include an animation massage, a text message and/or a voice message, for example.

The output unit 140 outputs the message. For example, the output unit 140 may include a speaker or a display panel, and if the message is the text message, may display corresponding texts on the display panel and if it is the voice message, may output corresponding voice through the speaker. Although an exemplary embodiment has been explained only as outputting the message through the output unit 140, other exemplary embodiments may include outputting the message through the projection unit 120.

The detection unit 150 detects an existence or a motion of an object (or person) within a projection space or area of the projection unit 120. For example, the detection unit 150 may include first and second sensors 131 and 132 disposed opposite thereto and are centered thereabout. In this case, the first and the second sensors 131 and 132 may be made up of pyro-electric infrared (PIR) sensors, respectively. If the PIR sensors as the first and the second sensors are used as described above, they may detect only a motion of a target via temperature or heat, thereby preventing an error from occurring, for example, preventing them from detecting whether or not there is an object other than a person. Although in the exemplary embodiment, the detection unit 150 has been explained as using the PIR sensors as the first and the second sensors, other exemplary embodiments may include a case where the detection unit 150 uses sensors other kinds of sensors for the first and the second sensors.

The control unit 160 is capable of controlling many components in the projector 100. The control unit 160 may control the projection unit 120 to project the images according to a control command of the user, and control the detection unit 150 to detect whether or not there is motion of the object within the projection area.

If there is motion of the object in the projection area, the control unit 160 may control the projector to be operated in a protection mode. Here, the protection mode is an operation where the projector turns off the projection light, reduces the projection light in strength, outputs a certain message, etc. For example, if the motion of the object is detected through the first and the second sensors 131 and 132, the control unit 160 may control the projection unit 120 to turn off the projection light thereof or reduce a strength of the projection light. In addition, the control unit 160 may control the output unit 140 to output the message stored in advance in the storing unit 130. This message outputting operation may be carried out along with the operation of turning off the projection light or reducing a strength of the projection light.

As described above, the projector 100 according to an exemplary embodiment can detect a person approaching the projection area or existing therein, and if the approach or the existence of the person is detected, can operate in the protection mode to prevent an accident due to the projection light.

FIG. 2 is a side view showing a projection area of the projector according to an exemplary embodiment.

Referring to FIG. 2, the projector 100 is an ultra-short focus projector, which projects light for images. For example, the projector 100 projects the light according to the images toward a screen 10 via a mirror, and thus the light of the projected image is projected onto the screen 10.

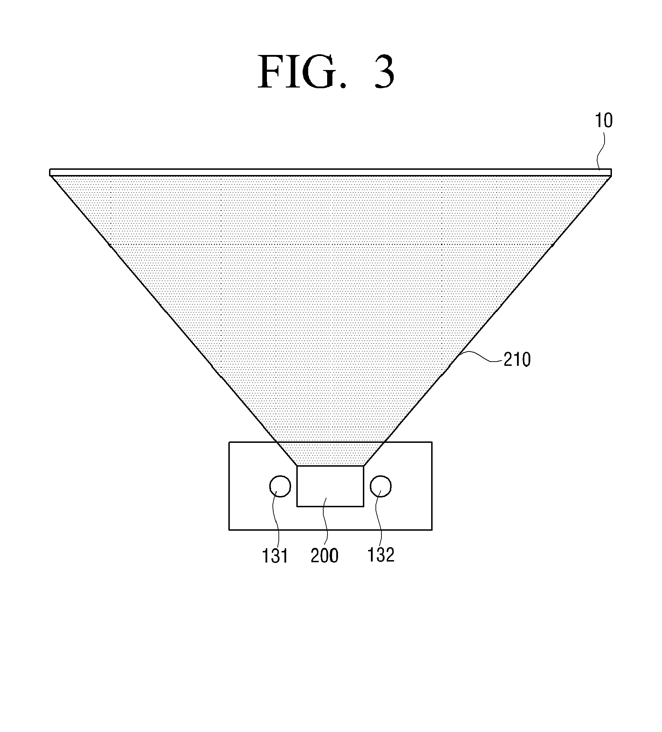

FIG. 3 is a top view showing an example of the projection area of the projector according to an exemplary embodiment. Hereinafter, to facilitate explanation, a direction parallel with the screen is referred as an "X" direction, and a direction vertical to the X direction (i.e., a direction toward the screen) is referred as an "Y" direction.

Referring to FIG. 3, a projection area 210 to which the light is projected from the ultra short focus projector 100 has an angle of projection wider than that of the projection area of the related art projector. To detect such a wide projection area 210, the detection unit 150 according to an exemplary embodiment is provided with the first and the second sensors 131 and 132 disposed opposite to the projection unit 120 or 200, and centered with respect to the projection unit 120 or 200.

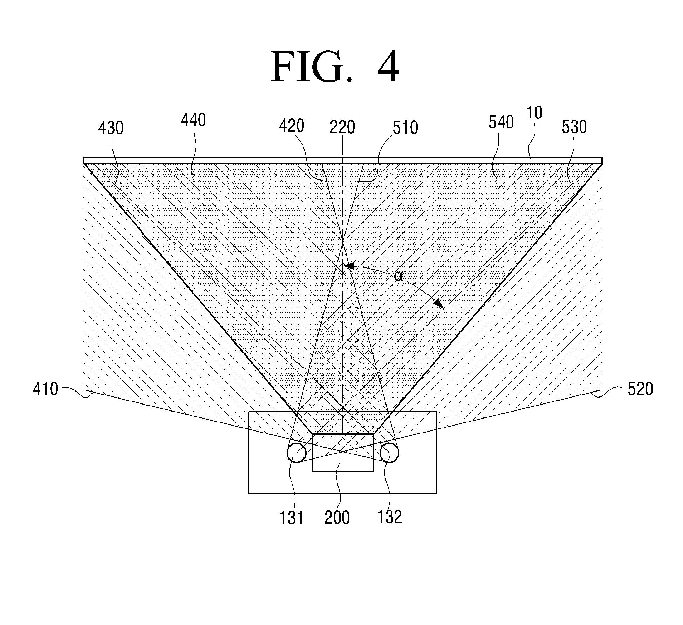

Here, the first sensor 131 is disposed on the left side of the projection unit 200 in the X direction, and detects the motion of the object to a right region and a center region of the projection area 210. The second sensor 132 is disposed on the right side of the projection unit 200 in the X direction, and detects the motion of the object to a left region and the center region of the projection area 210. The detection areas of the first and the second sensors 131 and 132 will be described later with reference to FIGS. 4 to 6.

Although in the explanation on FIG. 3, the first and the second sensors 131 and 132 have been explained as being disposed on the same line (i.e., the same X axis) with respect to the projection unit 200, they may be disposed on or near the rear of the projection unit 200 (i.e., the Y direction) with respect to the screen 10. Also, although the first and the second sensors 131 and 132 have been explained as being directly disposed adjacent to the projection unit 200 in the direction of the X axis, they may be disposed apart from the projection unit 200 in the same direction of the X axis.

Hereinafter, the detection areas of the first and the second sensors 131 and 132 will be described with reference to FIGS. 4 to 6.

FIG. 4 is a top view showing the detection area of the projector according to an exemplary embodiment.

Referring to FIG. 4, the first sensor 131 is disposed on the left of the projection unit 120, and detects the center region and the right region of the projection area 210. For example, an axis 530 of detection of the first sensor 131 intersects a right area of the screen 10 with respect to a center axis 220 of projection, and the detection area 540 of the first sensor 131 is from a first axis 510 to a second axis 520. Here, an angle between the first axis 510 and the second axis 520 may be approximately 80 degrees. In addition, the axis 530 of detection of the first sensor 131 may form an angle α of 30 to 50 degrees in a horizontal direction, for example, with the center axis 220 of projection, i.e., about which images are projected from the projection unit 200 (120 of FIG. 1). Such an angle between the first axis 510 and the second axis 520 is typical of a detecting angle of the general PIR sensors, however PIR sensors may have different detecting angles, or other sensors may be used which may have varying detecting angles.

The second sensor 132 is disposed on the right of the projection unit 120, and detects the center region and the left region of the projection area 210. For example, an axis 430 of detection of the second sensor 132 intersects a point at a left area of the screen 10 with respect to the center axis 220 of projection, and the detection area 440 of the second sensor 132 is from a third axis 410 to a fourth axis 420. Here, an angle between the third axis 410 and the fourth axis 420 may be approximately 80 degrees. In addition, the axis 430 of detection of the second sensor 132 may form an angle of 30 to 50 degrees in the horizontal direction, for example, with the center axis 220 of projection, which projects the images from the projection unit 200. Such an angle between the third axis 410 and the fourth axis 420 is typical of the detecting angle of the general PIR sensors, however PIR sensors may have different detecting angles, or other sensors may be used which may have varying detecting angles.

As described above, the first and the second sensors 131 and 132 are arranged so that the axes of detection intersect each other, thereby allowing the first and the second sensors 131 and 132 to maximally cover the projection area 210 of the projector 100.

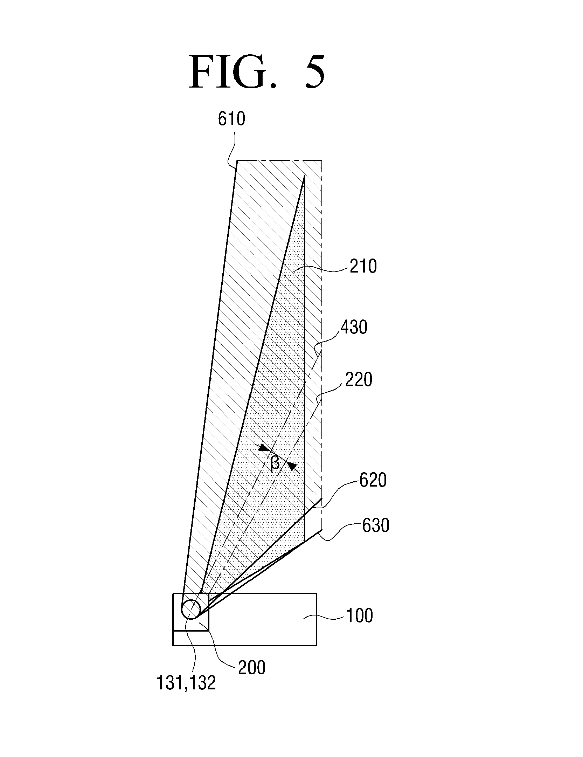

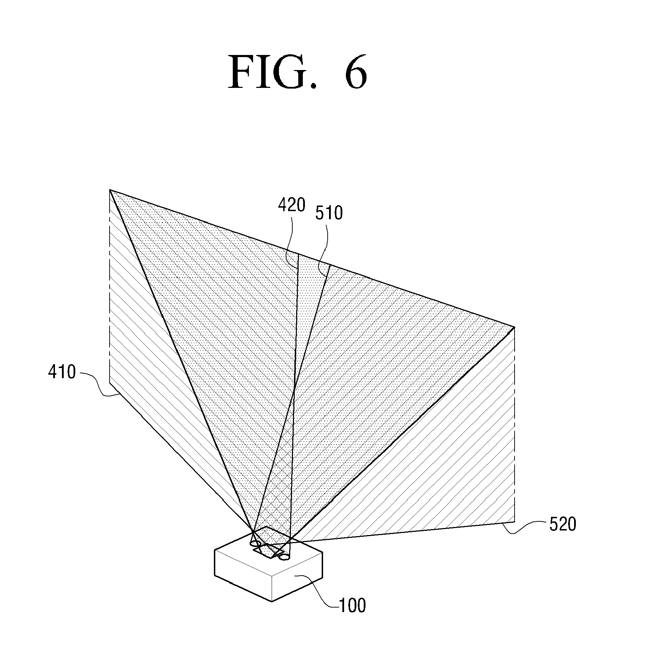

FIGS. 5 and 6 are alternative views showing the projection area of the projector according to exemplary embodiments. Hereinafter, to facilitate explanation, an up and down direction of the projector is referred as a "Z" direction.

Referring to FIGS. 5 and 6, the axes 530 and 430 of detection of the first and the second sensors 131 and 132 have the same angle in the Z direction. At this time, an angle β between the axes 530 and 430 of detection and the center axis 220 of projection, which projects the images from the projection unit 200, forms an angle of 5 to 15 degrees in a vertical direction, for example.

As described above, the detection areas of the first and the second sensors 131 and 132 may be located at various places with respect to the projection space or area 210 of the projection unit 120, thereby easily detecting the movement of a user with respect to the projector 100.

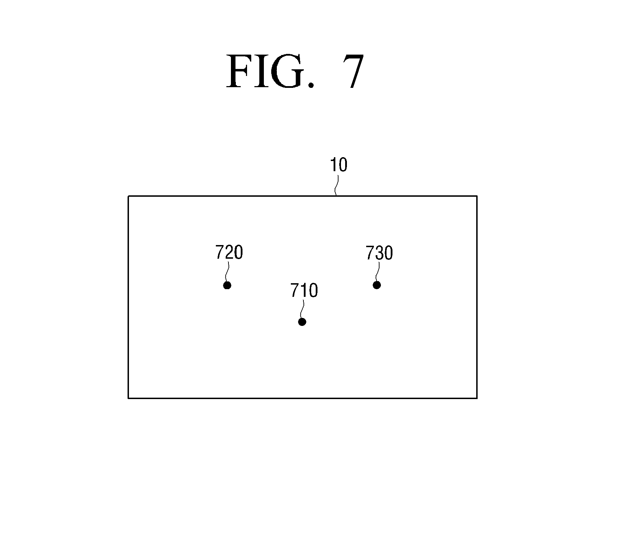

FIG. 7 is a view showing a screen point to the axis of detection and the center axis of projection according to an exemplary embodiment.

Referring to FIG. 7, the axis 530 of detection of the first sensor 131 intersects a first point 730 on an upper right side with respect to a screen point 710 intersecting the center axis 220 of projection, about which images are projected by the projection unit 200.

The axis 430 of detection of the second sensor 132 intersects a second point 720 on an upper left side with respect to the screen point 710 intersecting the center axis 220 of projection, about which images are projected by the projection unit 200.

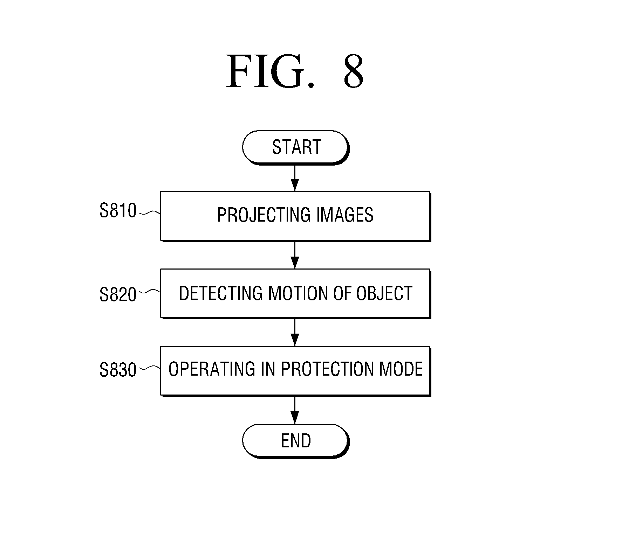

FIG. 8 is a flowchart showing a control method of the projector according to an exemplary embodiment.

Referring to. FIG. 8, images are first projected (S810). For example, the images may be projected onto the screen 10 by using the light source, such as a lamp or an LED.

Further, a motion of an object is detected through the first and the second sensors disposed opposite to the projection unit, and centered with respect to the projection unit (S820). Since the operation of detecting the motion of the object using the first and the second sensors is explained above with reference to the detection unit 150 of FIGS. 1 and 4 to 7, a redundant explanation thereon will be omitted.

When the motion of the object is detected by the first and the second sensors, the projector operates in a protection mode (S830). For example, if motion of the object is detected through the first and the second sensors, the projector may be operated so as to turn off a projection light, which projects the images, or to reduce a strength of the projection light. Additionally, the projector may inform a user of the previously stored message.

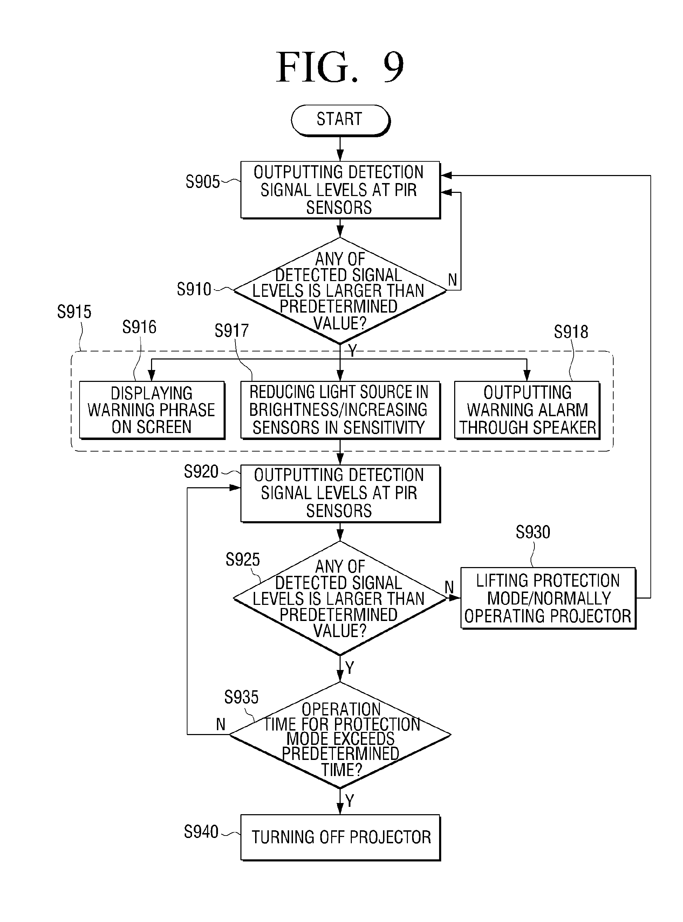

FIG. 9 is a flowchart for explaining the detecting operation and the protection mode operation, an example of which is shown in FIG. 8, in more detail.

Referring to FIG. 9, first, when detection signal levels are output from the first and the second sensors (S905), it is determined whether any of the detection signal levels are larger than a predetermined signal value (S910). The predetermined signal value may be a signal value provided from a manufacturing company, and may be an experimental value which corresponds to a temperature measured of the person or from heat emitted by the person. Such a detecting operation may be carried out in real time or each predetermined time (for example, 0.5 seconds)

If any of the detected signal levels are larger than the predetermined signal value, the projector operates in the protection mode (S915). For example, a warning phrase (or message) may be displayed on the screen (S916), a warning alarm may be output through the speaker (S918), or the strength of the projection light may be reduced (S917).

After entering the protection mode, detection signal levels are received from the first and the second sensors again (S920), and it is determined whether any of the detection signal levels are larger than the predetermined signal value (S925).

If any of the detected signal levels are not larger than the predetermined signal value (S925-N), the protection mode may be lifted (S930).

If any of the detected signal levels are larger than the predetermined signal value (S925-Y), it is determined whether an operation time for the protection mode exceeds a predetermined time (S935), and if it exceeds the predetermined time, the projection light may be turned off (S940). Although in the exemplary embodiment the turnoff operation has been explained as turning off the projection light only when the operation time for the protection mode exceeds the predetermined time, it may be embodied in a form where if the detected signal levels is larger than the predetermined signal value, the projection light is turned off directly.

Accordingly, the control method of the projector according to an exemplary embodiment may detect the person approaching the projection area or existing therein, and if the approach or the existence of the person is detected, the projector may operate in the protection mode, thereby preventing an accident due to the projection light. The examples of the control methods of the projector shown in FIGS. 8 and 9 may be applied to and executed, for example, by the projector having the configuration of FIG. 1, but also by projectors having other configurations.

As described above, although the present inventive concept has been explained by the exemplary embodiments, it is not limited to the foregoing exemplary embodiments. The present teaching can be readily applied to other types of apparatuses and many alternatives, modifications, and variations will be apparent to those skilled in the art.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A projector comprising:
a projection unit configured to project an image;
first and second sensors which are disposed to be centered about the projection unit and configured to detect a motion of an object; and
a control unit configured to control the projector if the motion of the object is detected by at least one of the first and the second sensors,
wherein an axis of detection of the first sensor intersects an axis of detection of the second sensor.

2. The projector of claim 1, wherein the first sensor is disposed on a left of the projection unit and is configured to detect a right region and a center region of the projection area, and
wherein the second sensor is disposed on a right of the projection unit and is configured to detect a left region and the center region of the projection area.

3. The projector of claim 1 or 2, wherein the axis of detection of the first sensor forms an angle of substantially 30 to 50 degrees with a center axis of projection, and forms an angle of substantially 5 to 15 degrees with a center axis of projection.

4. The projector of any one of claims 1 to 3, wherein the axis of detection of the first sensor intersects a first point on an right side with respect to a screen point intersecting a center axis of projection, and
wherein the axis of detection of the second sensor intersects a second point on an left side with respect to the screen point intersecting the center axis of projection.

5. The projector of any one of claims 1 to 4, wherein the control unit controls the projection unit to turn off a projection light if the motion of the object is detected by the at least one of the first and the second sensors.

6. The projector of any one of claims 1 to 4, wherein the control unit controls the projection unit to reduce a projection light in strength if the motion of the object is detected by the at least one of the first and the second sensors.

7. The projector of any one of claims 1 to 6, further comprising:
a storing unit configured to store a message; and
an output unit configured to output the message stored in the storing unit,
wherein the control unit controls the output unit to output the message if the motion of the object is detected by the at least one of the first and the second sensors.

8. The projector of any one of claims 1 to 7, wherein the projector is an ultra-short focus projector.

9. The projector of any one of claims 1 to 8, wherein the first and the second sensors comprise pyro-electric infrared sensors, respectively.

10. A method of controlling a projector including a projection unit, the method comprising:
projecting an image by the projection unit;
detecting a motion of an object by at least one of a first and second sensor which are respectively disposed to be centered about the projection unit; and
controlling the projector if the motion of the obj ect is detected by the at least one of the first and the second sensors,
wherein an axis of detection of the first sensor intersects an axis of detection of the second sensor.

11. The method of claim 10, wherein the first sensor is disposed on a left of the projection unit and configured to detect a right region and a center region of the projection area, and
wherein the second sensor is disposed on a right of the projection unit and is configured to detect a left region and the center region of the projection area.

12. The method of claim 10 or 11, wherein the axis of detection of the first sensor intersects a first point on an right side with respect to a screen point intersecting a center axis of projection, and
wherein the axis of detection of the second sensor intersects a second point on an left side with respect to the screen point intersecting the center axis of projection.

13. The method of any one of claims 10 to 12, wherein the controlling comprises turning off a projection light projecting the image if the motion of the object is detected by the at least one of the first and the second sensors.

14. The method of any one of claims 10 to 12, wherein the controlling comprises reducing a projection light projected by the projector in strength if the motion of the object is detected by the at least one of the first and the second sensors.

15. The method of any one of claims 10 to 14, further comprising:
outputting a previously stored message if the motion of the object is detected by the at least one of the first and the second sensors.
